# EUROPEAN PATENT SPECIFICATION

(11) **EP 3 873 682 B1**
(45) Date of publication and mention of the grant of the patent: **15.06.2022**
(21) Application number: 19808535.9
(22) Date of filing: 30.10.2019
(51) Int. Cl.: B08B 3/10, B08B 3/04, B01D 29/03, B01D 29/62, B01D 29/96

(54) **CLEANING OF INDUSTRIAL COMPONENTS**
REINIGUNG VON INDUSTRIELLEN BAUTEILEN
NETTOYAGE DE COMPOSANTS INDUSTRIELS

(30) Priority: 30.10.2018 BE 201800129
(43) Date of publication of application: 08.09.2021
(73) Proprietor: INDUSCLEAN Naamloze Vennootschap, 9170 Sint-Gillis-Waas (BE)
(72) Inventor: DE BOECK, Frans, 9170 Sint-Gillis-Waas (BE)
(74) Representative: Jacobs, Tinneke Ivonne C
(86) International application number: PCT/EP2019/079753
(87) International publication number: WO 2020/089346

(56) References cited:
- US-A- 4 226 642
- US-A- 5 268 035
- US-A- 5 488 964
- US-A- 5 501 240

## Description

### Technical field of the invention

The present invention relates to the field of cleaning of industrial components, such as a component of a device for performing a chemical process. The invention relates, particularly, to a device and a method for cleaning industrial components.

### Technical background of the invention

In various industrial processes, industrial components are used that become polluted due to the process. These industrial processes can, for example, refer to processes in the petrochemical industry, but also to processes in other industries, such as the pharmaceutical industry, maritime transport and/or offshore installations, energy production, gas industry and the like. The industrial processes can be situated, predominantly, in the large-scale industry.

For example, in refinement processes industrial plate filters, also called leaf filters, can be used. Such plate filters typically comprise a porous filter membrane having precisely determined pore dimensions, in accordance with the requirements of the industrial process. For example, in about 60% of the large-scale industry processes, such leaf filters can typically be used. These leaf filters can become strongly soiled with, amongst others, bleaching earth, which has a negative effect on the capacity and the quality of the refinement process. A need exists in the art to clean such leaf filters, and other industrial components, quickly, professionally, safely and environmentally friendly.

It is known in the art to clean industrial components by treatment with an alkaline solution, such as a sodium hydroxide solution, and, afterwards, rinsing with water. However, this has the disadvantage that the strongly caustic waste water must be neutralized by adding large quantities of acid before the waste water can be discharged. Notwithstanding the cost and the potential environmental impact of such an approach, safety risks are associated with the use of a strongly alkaline solution and/or of strong acids to neutralize the waste water. Furthermore, porous components, such as leaf filters, can easily become clogged with salts after a few cleanings due to crystallization and the reaction of the lye with products, in which further cleaning becomes unpractical or even impossible. This can lead to a necessary replacement of the components or radical repairs.

Another cleaning method known in the art is a thermal treatment in an oven to pyrolyze waste on the component. This can lead to damage to the component, for example by deformation of the filter mesh in a leaf filter.

Is is also known in the art to soak the components in water and then hosing them off using water under high pressure. This has the disadvantage that fragile parts of the component, such as the filter mesh of a leaf filter, can deform due to the hosing under high pressure. In such a treatment of leaf filters, contamination can end up between the filter membranes, which disrupts the proper functioning thereof and can damage the filters.

It is also known in the art to clean the components mechanically, such as by scraping, which, however, can also damage the components.

Furthermore, it is commonplace to clean industrial process plants on-site, for example using suction vehicles and/or hosing down under high pressure. Such cleanings can be performed at a planned or due to the circumstances required shutdown of the plant, and should, therefore, be executed in a very short time.

Many recent developments, for example in biodiesel production, aim to improve the sustainability, such as by utilizing waste products. Where formerly biodiesel was produced from agricultural products, such as rapeseed oil, en thereby thus spent an agriculatural capacity, now the possibility exists to produce biodiesel from waste products, such as used frying oil and waste fat, e.g. from slaughterhouses.

For example, because a transition is increasingly made, for ecological reasons, from purely plant-based resources as basis for biodiesel to waste products, which presently are composed mostly of animal fats, previously unknown problems occur in the elementary process steps in the production of biodiesel, particularly in filtration. Embodiments of the present invention, can offer a suitable solution for cleaning, for example, leaf filters in an efficient, safe and environmentally friendly manner. The latter aspect can be considered as particularly important, since this relates to an essential raison d'etre of the biodiesel industry.

This implies that the manufacturing process should be able to use resources of variable quality and composition. To use waste products as a raw material in such a process, a reliable filtration is essential. Therefore, a thorough and efficient cleaning of the filters becomes even more important, while the cleaning method should be able to process filters of a highly variable degree and/or nature of pollution. Known cleaning methods may therefore be insufficient to provide, under such changed conditions, an efficient and sound cleaning. Furthermore, it is extremely desirable to provide the cleaning process in an environmentally friendly and sustainable manner, for example to avoid a substantial reduction of the pursued improved sustainability by processing waste products. US5501240 discloses a cleaning method and corresponding apparatus.

### Summary of the invention

An object of embodiments in accordance with the present invention is to provide in an efficient and thorough cleaning of industrial components, such as leaf filters.

It is an advantage of embodiments of the present invention that industrial components do not need to be cleaned at or near the location of the industrial plant where these components are used. For example, the components can be transported to an off-site specialized cleaning facility.

It is an advantage of embodiments of the present invention that industrial components, such as filters and process components, can be cleaning in a sustainable and/or environmentally friendly manner. For example, industrial components can be thoroughly cleaned, even at a high initial level of pollution, without using aggressive, poisonous and/or environmentally dangerous chemicals.

It is an advantage of embodiments of the present invention that, compared to a known alternative method, a reduction of carbon dioxide emission can be achieved.

It is an advantage of embodiments of the present invention that, compared to a known alternative method, a reduction of energy consumption can be achieved.

It is an advantage of embodiments of the present invention that a qualitative and thorough cleaning of components can be achieved.

It is an advantage of embodiments of the present invention that industrial components can be reused after cleaning. It is a further advantage that hereby costs and/or waste can be reduced in industrial processes. This can also lead to an improved sustainability in industrial processes.

It is an advantage of embodiments of the present invention that industrial components can be cleaned quickly and/or safely.

It is an advantage of embodiments of the present invention that a treatment with pyrolysis or ultrasonification are not required in cleaning the industrial components, unless, for example, to test the cleaned components. It is therefore also an advantage that damage by pyrolysis or ultrasonification can be avoided.

The goal presented hereinabove is achieved by a device and a method in accordance with the present invention.

In a first aspect, the present invention provides a device for cleaning industrial components, wherein the device comprises at least one (process) line for cleaning the industrial components in a continuous or semi-continuous cleaning process. The at least one line (for example each line) comprises:
- a plurality of soaking baths for soaking the industrial components in, for example multiple soaking baths to soak each industrial component in consecutively,
- an air flotation bath to treat the industrial components further, after soaking, with air flotation, and
- a rinsing device to rinse the industrial components after treatment in the air flotation bath.

The device further comprises a hoist system to introduce the industrial components in, consecutively, each of the soaking baths, in the air flotation bath and in the rinsing device.

A device in accordance with embodiments of the present invention may comprise a testing device to test the quality and/or the integrity of the industrial components after rinsing in the rinsing device.

In a device in accordance with embodiments of the present invention, the testing device may be adapted for performing a bubble test to register the density and/or the pressure resistance of each industrial component.

In a device in accordance with embodiments of the present invention, each of the soaking baths may comprise a treatment tub. The treatment tub may be composed of steel, e.g. stainless steel.

In a device in accordance with embodiments of the present invention, the industrial components may comprise industrial filters. The industrial filters may comprise (e.g. planar) leaf filters.

In a device in accordance with embodiments of the present invention, the treatment tub may comprise holders to place multiple (planar) leaf filters vertically and parallel with respect to each other when submerged in the treatment tub.

In a device in accordance with embodiments of the present invention, each of the soaking baths may be adapted for soaking the industrial components in a liquid, mainly (e.g. >75 v/v%, > 90 v/v%, e.g. >95 v/v%, e.g. >99 v/v%) composed of water, at a temperature in the range of 40°C to 95°C, preferably in the range of 65°C to 90°C. It is an advantage that in this range an optimal action of alkaline cleaning agents can be achieved.

In a device in accordance with embodiments of the present invention, each of the soaking baths may comprise a heating module with a thermostat to regulate the temperature, e.g. to a value in a range as referred to hereinabove.

In a device in accordance with embodiments of the present invention, the liquid may have a pH value in the range of 8.0 to 14, obtained by dissolving an alkali salt in water.

In a device in accordance with embodiments of the present invention, the liquid may comprise a solution of potassium hydroxide (KOH), for example having a concentration in the range of 2.5 v/v% to 10 v/v%, for example in the range of 4 v/v% to 6 v/v%, for example about 5 v/v% KOH.

In a device in accordance with embodiments of the present invention, the liquid may comprise a biologically degradable cleaning agent, such as for example caprylglucoside. For example, the liquid may comprise a concentration of 0.5 v/v% to 3 v/v%, e.g. about 1 v/%, caprylglucoside.

In a device in accordance with embodiments of the present invention, the liquid may comprise an antifoaming agent.

The device may further comprise an ultrasonification system to provide, in addition to a chemical removal of pollution, a mechanical removal of pollution by the action of ultrasonic sound on particulate pollutant matter, e.g. clay particles. It is an advantage that a shorter treatment time may be achieved by using ultrasonification in addition to chemical treatment. It is an advantage that the total energy consumption per cleaned component can be reduced, since the treatment time can be reduced (and therefore heating costs per component can be reduced). A more efficient removal of particulate pollutant matter having strongly adhesive characteristics, such as clay particles, from the leaf filters may thus be achieved. The ultrasonification system may be installed (or incorporated) in one or more of the soaking baths. However, ultrasonification may have the disadvantage that it may cause mechanical damage, e.g. to leaf filters. In many embodiments, the use of ultrasonification may be unnecessary. For example, the removal of particulate matter, such as clay, and oil and/or grease may be carried out under chemical action of, for example, an alkaline environment and/or under a high temperature. Under those conditions, the particulate matter, such as clay particles, may fall downward on the force of gravity, while oil and fat may be bound by chemical agents and/or may float to the surface. However, for specific types of pollution, the inclusion of a mechanical removal component, e.g. the ultrasonification, may be particularly useful. This may be the case, without limitation thereto, when, for example, only a small amount of clay particles is present, or when pollution particles (e.g. clay particles) have a particularly small diameter, the particles being less heavy such that it would be more difficult for such particles to release from the component and to sink to the bottom. Another example would be oils and/or fats having particularly strong hydrophobic properties, such as shea butter, which could decrease the efficiency of chemical agents. Another example would be a case where activated carbon is present (e.g. added during production) and needs to be removed.

In a device in accordance with embodiments of the present invention, the rinsing device may be adapted to rinse the industrial components with water at a temperature in the range of 75°C to 100°C and a pressure in the range of 2.0 bar to 50 bar, for example at a low pressure in the range of 2 to 5 bar, or at a high pressure in the range of 10 bar to 50 bar.

In a device in accordance with embodiments of the present invention, the rinsing device may be adapted to rinse the industrial components with soft water.

A device in accordance with embodiments of the present invention may comprise at least two of said lines, wherein these lines provide in the cleaning of industrial components in parallel and wherein the water and/or power supplies of said lines are interconnected.

In a device in accordance with embodiments of the present invention, the or each of the at least one line may comprise at least four of said soaking baths.

In a second aspect, the present invention provides a method for cleaning industrial components. The method comprises a continuous or semi-continuous cleaning process, in which the cleaning process comprises:
- soaking the industrial components consecutively in multiple soaking baths,
- next, treating the industrial components in an air flotation bath, and
- next, rinsing the industrial components.

In a method in accordance with embodiments of the present invention, the industrial components may comprise leaf filters.

In a method in accordance with embodiments of the present invention, the soaking of the industrial components may comprise placing multiple leaf filter vertically and parallel wit respect to each other in a soaking bath such that de multiple leaf filters are submerged in the soaking bath.

In a method in accordance with embodiments of the present invention, the soaking may comprise soaking in a liquid, mainly (e.g. >75 v/v%, > 90 v/v%, e.g. >95 v/v%, e.g. >99 v/v%) composed of water, at a temperature in the range of 40°C to 95°C, preferably in the range of 65°C to 90°C.

In a method in accordance with embodiments of the present invention, the leaf filters may be soaked, in the soaking baths, for a time period in the range of 2 hours to 24 hours.

In a method in accordance with embodiments of the present invention, the soaking may comprise the soaking in water in which an alkali salt is dissolved, in which the liquid has a pH value in the range of 8.0 to 14.

In a method in accordance with embodiments of the present invention, the rinsing may comprise the rinsing of the industrial components with water at a temperature in the range of 75°C to 100°C and a pressure in the range of 2.0 bar to 50 bar.

In a method in accordance with embodiments of the present invention, the rising may comprise the rinsing with soft water.

A method in accordance with embodiments of the present invention may comprise transporting, by a freight vehicle, of the industrial components from an industrial plant where these industrial components were polluted to a cleaning plant, and, after performing the continuous or semi-continuous cleaning process by the cleaning plant, transporting, by a freight vehicle, the cleaned industrial components to the industrial plant.

Specific and preferred aspects of the present invention are included in the attached independent and dependent claims. Features of the dependent claims can be combined with features of the independent claims and with features of other dependent claims as appropriate and not solely as explicitly expressed by the claims.

### Brief description of the drawing

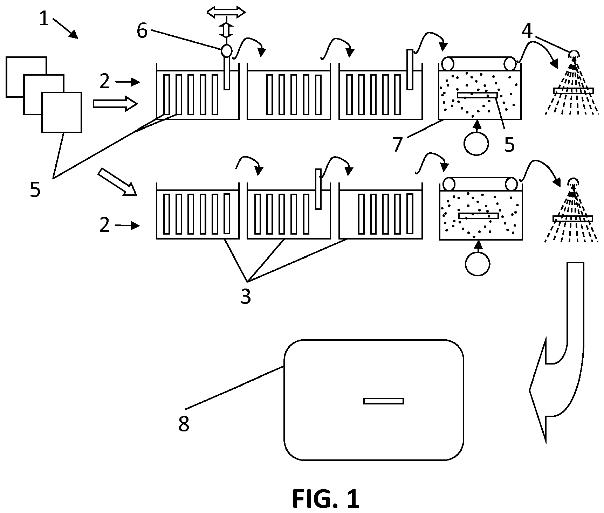

FIG. 1 shows a device in accordance with embodiments of the present invention.

The drawing is only schematic and not limiting. In the drawing, dimensions of some parts may be exaggerated and not drawn to scale for illustrative purposes. Reference numbers in the claims cannot be interpreted to limit the scope of protection.

### Detailed description of embodiments of the present invention

The present invention will be described in relation tot specific embodiments and in reference to certain drawings. However, the invention is not limited thereto, but is only limited by the claims.

References throughout the specification to "one embodiment" or "an embodiment" means that a specific feature, structure or characteristic that is described in relation to the embodiment is included in at least one embodiment of the present invention. Thus, occurrence of the expressions "in one embodiment" or "in an embodiment" throughout the specification do not necessarily refer to the same embodiment, even though they might. Furthermore, the specific features, structures or characteristics can be combined in any suitable manner in one or more embodiments, as will be clear for the man of ordinary skill in the art based on the present disclosure.

Similarly, it should be appreciated that in the description of exemplary embodiments of the invention several features of the invention are sometimes grouped together in a single embodiment, drawing or description thereof, in order to streamline the disclosure and aid in the understanding of one or more of the different inventive aspects. This method of disclosure should, however, not be interpreted as reflecting an intention that the invention requires more features than explicitly stated in each claim. As the claims may reflect, inventive aspects may be found in less than all features of a single disclosed embodiment. Thus, the claims following the detailed description are hereby explicitly incorporated in this detailed description, with each separate claim as a separate embodiment of the present invention.

Furthermore, while some, but not other, of the embodiments herein described comprise features that are comprised in other embodiments, combinations of features of different embodiments are intended as lying within the scope of the invention and these different embodiments, as would be understood by the skilled person. For example, in the following claims, any of the described embodiments may be used in any combination.

Furthermore, the terms first, second, third and the like in the description and the conclusions are used to distinguish similar element and not necessarily to describe an order, neither in time, spatially, in order of occurrence nor in any other way. It should be understood that the terms used in such manner are, under suitable circumstances, exchangeable and the embodiments of the present invention described herein may be suitable to work in other orders than described or depicted.

The terms top, bottom, up, before and the like in the description and the conclusions are used for descriptive purposes and not necessarily to describe relative positions. It should be understood that the terms used in such manner are, under suitable circumstances, exchangeable and that embodiments of the invention described herein may also be suitable to work in other orientations than described or depicted.

It should be noted that the term "comprise", as used in the claims, is not limited to the thereon following means; this term does not exclude other elements or steps. It is therefore to be interpreted as specifying the presence of the mentioned features, values, steps or components to which reference is made, but does not exclude the presence or addition of one or more other features, values, steps or components, or groups thereof. Thus, the scope of the expression "a device comprising means A and B" should not be limited to devices that consist of only the components A and B. It means that A and B are the only relevant components of the device in relation to the present invention.

In present description, numerous specific details are described. It is however to be understood that embodiments of the invention can be practiced without these specific details. In other cases, well-known methods, structures, and techniques are not shown in detail to keep the present description clear.

In a first aspect, the present invention relates to a device for cleaning industrial components.

FIG. 1 shows, schematically, an exemplary device 1 (e.g. system, plant) in accordance with embodiments of the present invention.

The device 1 comprises at least one line 2 (e.g. industrial line, process line) for cleaning industrial components 5 in a continuous or semi-continuous cleaning process.

The industrial components may comprise porous components, in which pores in the industrial components may be sensitive to clogging by pollutants. The industrial components may comprise industrial filters. The industrial filters may comprise leaf filters (e.g. planar leaf filters).

A continuous or semi-continuous cleaning process refers to a process in which the industrial components can be transported in a feeding flow throughout the process, such that industrial components can be cleaned continuously. This continuous or semi-continuous process does not imply that the industrial components are continuously in motion, but for example that each of the industrial components goes stepwise through the consecutive process steps.

The at least one line (e.g. each line) 2 comprises a plurality of soaking baths 3 (e.g. tubs, tanks, basins) to soak the industrial components in consecutively. For example, an industrial component may be moved from one soaking bath to the next, such that it is soaked in each of the soaking baths consecutively. The soaking baths 3 can provide a chemical treatment in which the pollution is soaked off the leaf filters by action of ecologically acceptable cleaning agents, such as alkali salts, at a raised temperature and for a predetermined treatment time.

Each of the soaking baths 3 may comprise a treatment bath, e.g, a tub. These treatment baths may be composed of metal, such as steel, e.g. stainless steel.

Each of the soaking baths 3 may also comprise a collection device to collect sludge that settles down at the bottom of the bath.

Each treatment bath may comprise at least one holder to place a plurality of leaf filters vertically and parallel with respect to each other in the treatment bath, for example as schematically illustrated in FIG. 1, such as to submerge the leaf filters in a liquid in the treatment bath in use of the device. It is an advantage that a vertical and spaced apart placement of the leaf filters allows pollution, such as oil remains or sludge, to sediment at the bottom of the treatment bath or to float to the surface of the liquid in the treatment bath with a limited risk that such pollution is caught by another leaf filter in the treatment bath.

Each soaking bath 3 is adapted for soaking the industrial components in a liquid, such as water or a liquid mainly composed of water, at a temperature in the range of 40°C to 95°C, preferably in the range of 65°C to 90°C, such as 60°C or 80°C.

The liquid, for example the water, may have a pH value in the range of 8.0 to 14, for example in the range of 9.0 to 12.0. For example, in operation of the device, an alkali salt, such as sodium hydroxide or potassium hydroxide, may be dissolved in the water to obtain a predetermined pH value.

The liquid may also comprise, additionally or alternatively, other cleaning agents as known in the art, preferably environmentally friendly cleaning agents.

The liquid may also comprise an antifoaming agent to reduce or avoid the formation of foam.

For example, each of the soaking baths may comprise a heating module with thermostat to regulate the temperature of the liquid in the bath. The heating module may comprise an active heating element, such as an electric heating element or a combustion heating. The heating module may also comprise an energy recuperation system. For example, heat may be recovered from water that drains from the rinsing device to keep one or more of the soaking baths at their predetermined temperature (or within a predetermined temperature range) by passive heat transfer or by active control of pumps and/or valves that modulate such heat transfer. Furthermore, in embodiments of the present invention, the water drain of the rinsing device may be used to continuously or periodically replenish one or more soaking baths.

The liquid in each of the soaking baths may for example be refreshed periodically, e.g. once a month to once a week, for example once every two weeks. The removed contents of the soaking bath may, for example, be treated, e.g. purified, using a biological and/or physico-chemical water treatment. A device in accordance with embodiments of the present invention may comprise a biological and/or physico-chemical water treatment device to treat the polluted liquid removed from the soaking baths. Such water treatment devices are well-known in the art.

The at least one line (e.g. each line) 2 comprises also an air flotation bath 7 to treat the industrial components 5 further after soaking. In this air flotation bath, oils and/or fats are removed from the industrial component 5 by air flotation, i.e. Dissolved Air Flotation (DAF). In the context of the present disclosure, "air flotation" may also (alternatively or additionally) comprise the equivalent use of another gas than air, such as nitrogen, i.e. may also refer to Dissolved Gas Flotation (DGF). Alternative, but very similar, techniques such as induced gas flotation are also considered to fall within the scope of the term "air flotation".

For example, air may be dissolved under pressure, for example at a pressure in the range of 5 to 7, in water. When the air-saturated water is released, small bubbles are formed in the air flotation bath 7, which interact with congealed fats and/or oils such that these can float to the surface of the bath.

For example, the air flotation bath 7 may comprise a heater and an air supply at the bottom of the bath to inject microbubbles, for example having a diameter of about 2 µm, into the air flotation bath. These microbubbles may accelerate and/or improve the release of an oil layer on the industrial components.

The air flotation bath may comprise a skimmer to skim off a polluted floating layer at the surface of the bath. For example, the components 5 may be submerged and agitated in the air flotation bath 7. For example, the air flotation bath may be replenished continuously or periodically with clean water while polluted water and/or oils and/or fats floating on the surface are removed, for example using a skimmer and/or scraper.

For example, the flotation treatment may advantageously remove an oil layer from the leaf filters. Such an oil layer may be formed on the filter plates, because the filter plates are removed from the top side of the soaking baths when soaked off oils and fats float on the top surface in the soaking bath.

It is an advantage of embodiments of the present invention that the air flotation bath does not necessarily require a skimmer. The air flotation bath may comprise a separate overflow, through which water with floating oils and/or fats is removed. The air flotation bath may comprise a water supply to add fresh water to the air flotation bath, such that the water removed via the overflow is compensated and such that the water level can be kept substantially constant, for example at the level of the overflow (or just below the overflow). This has the additional advantage that the water level will temporarily raise to above the overflow when a component, e.g. a leaf filter, is introduced into the air flotation bath, such that the water overflowing via the overflow quickly and efficiently removes the oil film floating on top of the liquid each time a new component to be treated is introduced into the bath.

The at least one line (e.g. each line) 2 also comprises a rinsing device 4 for rinsing the industrial components 5 after the treatment in the air flotation bath 7.

The rinsing device 4 may be adapted for rinsing the industrial components with water at a temperature in the range of 75°C to 100°C, for example in the range of 85°C to 95°C, such as at a temperature of about 90°C, and at a pressure in the range of 2 bar to 50 bar, for example in the range of 2.5 bar to 40 bar, for example at about 4 bar, for example at about 30 bar.

Preferably, the rinsing device may be adapted for rinsing, e.g. hosing off, the industrial components with soft water. For example, the soft water may have a concentration of Ca²⁺ (e.g. from calcium carbonate or other calcium-containing salts) in the range of 0.0 to 1.5 mmol/l, preferably in the range of 0.0 to 0.7 mmol/l, such as in the range of 0.0 to 0.3 mmol/l. It is an advantage that clogging of pores in the industrial components, such as pores of leaf filters, by chalk can be mostly avoided or prevented.

The rinsing device 4 may for example comprise a rinsing machine with multiple spray nozzles for hosing off the components.

The rinsing device 4 may comprise a spraying installation for hosing off the components, e.g. a spray booth.

It is an advantage of the rinsing device that waste remains, such as oil, which float to the surface in the air flotation bath, and therefore may be left on the components when these are removed from the bath (for example using a hoist), can be removed by hosing off.

In a preferred device in accordance with embodiments of the present invention, the device may comprise at least two of said lines 2, in which these lines provide the cleaning of industrial components in parallel. For example, such a line 2 may be conceived as a wash lane (e.g. similar to a car wash lane). The water and/of power supplies of these lines may be interconnected, for example to make efficient use of energy recuperation and/or recycling of waste water.

The line or each of the multiple lines may, for example, comprise at least four of said soaking baths. This has the advantage that the degree of pollution can be reduced stepwise by transferring a component from one soaking bath to a next soaking bath.

The device comprises a hoist system 6, such as a travelling winch, a crane trolley or a traverser, to insert the industrial component(s) in the soaking bath, or consecutively in each of the multiple soaking baths, then (thereafter; next) in the air flotation bath, and then (thereafter; next) in the rinsing device.

The device may comprise an automated control of the hoist system, to control (e.g. accurately) the time spent by the component(s) in each of the respective baths and the rinsing device.

For example, the automated control may be adapted for rotating (e.g. permuting; exchanging) the order of the soaking baths, such that a soaking bath progresses stepwise from the last soaking bath in the process chain (which may be filled with the cleanest liquid in relative terms) via the intermediate positions of the soaking baths to the first soaking bath in the process chain (filled with the dirtiest liquid with respect to the other soaking baths). This rotation obviously does not need to imply a physical movement, but may relate to merely a permutation of the order in which the components go through the soaking baths. When executing such a permutation, the soaking bath that occupied the first position in the treatment chain may be emptied, cleaned and refilled, to be reengaged as last soaking bath in the processing chain. By performing such a permutation approach, an additional soaking bath may be included to account for the position of the soaking bath that is being cleaned and refilled, e.g. to avoid holding up the processing line while this bath is being cleaned and refilled.

In an alternative or additional approach, liquid may be continuously or periodically hosed (or pumped) over from the last soaking bath to the preceding soaking bath in the chain, and so continuing on to a transfer of liquid from the second soaking bath to the first soaking bath. In the first soaking bath, poluted liquid may be removed from the chain, while in the last soaking bath clean liquid may be added.

Furthermore, a device 1 in accordance with embodiments of the present invention may comprise a testing device 8 to test the quality and/or integrity of the industrial components after rinsing in the rinsing device 4.

For example, the test device 8 may be adapted for performing a bubble point test to register the density and/or pressure resistance of each industrial component. Such a test device may comprise a water bath and an air compressor, in which, as is known in the art, the density of the leaf filters can be checked and the pressure resistance can be registered for each leaf filter.

In a second aspect, the present invention provides a method for cleaning industrial components. The method comprises a continuous or semi-continuous cleaning process, for example such as already described hereinabove.

The cleaning process comprises soaking the industrial components consecutively in multiple soaking baths, thereafter treating the industrial components in an air flotation bath and, thereafter, rinsing of the industrial components. The industrial components may comprise or consist of leaf filters.

The soaking of the industrial components may comprise placing multiple leaf filters vertically and parallel with respect to each other in the soaking baths such that the multiple leaf filters are submerged in the soaking baths.

The soaking may comprise soaking in water (or a liquid consisting of mostly water) at a temperature in the range of 40°C to 95°C, preferably in the range of 65°C to 90°C, for example as described hereinabove.

For example, leaf filters may be soaked in the soaking baths for a time period in the range of 2 hours to 24 hours. Preferably, this time period lies in the range of 2 hours to 12 hours, such as in the range of 3 hours to 5 hours, for example 4 hours.

The number of soaking baths (for a single treatment line) may lie in the range of 2 to 10, preferably in the range of 3 to 8, such as 4.

The soaking may comprise soaking in water in which an alkali salt is dissolved such that the liquid has a pH value in the range of 8.0 to 14, for example as described hereinabove.

The rinsing may comprise the rinsing of the industrial components with water at a temperature in the range of 75°C to 100°C and a pressure in the range of 2.0 bar tot 50 bar, for example as already described hereinabove.

The rinsing may comprise the rinsing of the industrial components with soft water, e.g. as described hereinabove.

The method may further comprise testing the cleaned industrial components, or testing a sample taken from the cleaned industrial components, to evaluate the quality of the cleaning process. This testing may comprise, for example, a pyrolysis treatment of the component to accentuate locations where pollution remains, for example combined with an optical or microscopic visual evaluation or an automated analysis of digital images. In this manner, remaining polution, damage and/or clogging may be detected.

The testing may comprise executing a test to test the quality and/or the integrity of the industrial components after rinsing. The test may comprise a bubble point test to check and/or register the density and/or the resistance pressure of each industrial component, for example each leaf filter.

The method may also comprise the transport, using a freight vehicle, of the industrial components from an industrial facility where these industrial components became polluted to a cleaning facility. After performing the continuous or semi-continuous cleaning process by the cleaning facility, the method may comprise the transport, using a freight vehicle, of the cleaned industrial components back to the industrial facility.

The preceding description provides details of certain embodiments of the invention. It will however be clear that, however detailed the preceding text may be, the invention may be practiced in many ways. It is to be noted that the use of certain terminology in describing certain features or aspects of the invention should not be seen to imply that the terminology is redefined herein to be limited to certain specific characteristics of the features or aspects of the invention to which this terminology is connected.

## Claims

1. A device (1) for cleaning industrial components (5), wherein the device comprises at least one line (2) for cleaning the industrial components in a a continuous or semi-continuous cleaning process, the at least one line comprising:
- a plurality of soaking baths (3) to consecutively soak the industrial components in,
- an air flotation bath (7) to treat the industrial components further after soaking,
- a rinsing device (4) for rinsing the industrial components after treatment in the air flotation bath (7), and
- a hoist system (6) for bringing the industrial components consecutively in each of the soaking baths, in the air flotation bath and in the rinsing device.

2. The device of claim 1, further comprising a testing device (8) for testing the quality and/or the integrity of the industrial components after rinsing in the rinsing device (4).

3. The device of claim 2, wherein the testing device (8) is adapted for performing a bubble point test to register the density and/or the pressure resistance of each industrial component.

4. The device of any of the previous claims, wherein each of the soaking baths (3) comprises a treatment bath.

5. The device of claim 4, in which the industrial components (5) comprise industrial filters and/or industrial leaf filters.

6. The device of claim 5, wherein the treatment bath comprises holders to place a plurality of the leaf filters vertically and parallel with respect to each other when submerged in the treatment bath.

7. The device of any of the previous claims, wherein each of the soaking baths is adapted for soaking the industrial components in a liquid that is mostly composed of water, the liquid being at a temperature in the range of 65°C to 90°C and/or the liquid having a pH value in the range of 8.0 to 14 obtained by dissolving an alkali salt in water.

8. The device of claim 7, wherein each of the one or more soaking baths comprises a heating module that comprises a thermostat to regulate the temperature.

9. The device of any of the previous claims, wherein the rinsing device (4) is adapted for rinsing the industrial components with soft water at a temperature in the range of 75°C to 100°C and a pressure in the range of 2.0 bar to 50 bar.

10. The device of any of the previous claims, wherein the device comprises at least two of said lines (2), wherein said lines provide the cleaning of industrial components in parallel and wherein the water and/or power supplies of said lines are interconnected.

11. The device of any of the previous claims, wherein the or each of the at least one line (2) comprises at least four of said soaking baths (3).

12. A method for cleaning industrial components, the method comprising a continuous or semi-continuous cleaning process, in which the cleaning process comprises:
- soaking the industrial components consecutively in a plurality of soaking baths,
- thereafter, treating the industrial components in an air flotation bath, and
- thereafter, rinsing the industrial components.

13. The method of claim 12, wherein said industrial components comprise leaf filters, wherein said soaking of the industrial components comprises placing a plurality of leaf filters vertically and parallel with respect to each other such that the plurality of leaf filters are submerged in the soaking bath.

14. The method of claim 12, wherein said industrial components comprise leaf filters, in which the leaf filters are soaked in one or in each of the soaking baths over a time period in the range of 2 hours to 24 hours.

15. The method of any of the claims 12 to 14, further comprising transporting the industrial components by a freight vehicle from an industrial facility where these industrial components became polluted to a cleaning facility, and, after executing the continuous or semi-continuous cleaning process by the cleaning facility, transporting the cleaned industrial components by a freight vehicle to the industrial facility.

## Patentansprüche

1. Vorrichtung (1) zum Reinigen von industriellen Komponenten (5), wobei die Vorrichtung wenigstens eine Leitung (2) zum Reinigen der industriellen Komponenten in einem fortlaufenden oder semi-fortlaufend Reinigungsvorgang umfasst, wobei die wenigstens eine Leitung Folgendes umfasst:
- mehrere Einweichbäder (3), um die industriellen Komponenten darin aufeinanderfolgend einzuweichen,
- ein Luftblasenflotationsbad (7), um die industriellen Komponenten nach dem Einweichen weiter zu behandeln,
- eine Spülvorrichtung (4) zum Spülen der industriellen Komponenten nach der Behandlung in dem Luftblasenflotationsbad (7) und
- ein Hebesystem (6) zum aufeinanderfolgenden Bringen der industriellen Komponenten in jedes der Einweichbäder, in das Luftblasenflotationsbad und in die Spülvorrichtung.

2. Vorrichtung nach Anspruch 1, die ferner eine Testvorrichtung (8) zum Testen der Qualität und/oder der Integrität der industriellen Komponenten nach dem Spülen in der Spülvorrichtung (4) umfasst.

3. Vorrichtung nach Anspruch 2, wobei die Testvorrichtung (8) zum Durchführen eines Blasendruck-Tests angepasst ist, um die Dichte und/oder den Druckwiderstand jeder industriellen Komponente zu registrieren.

4. Vorrichtung nach einem der vorhergehenden Ansprüche, wobei jedes der Einweichbäder (3) ein Behandlungsbad umfasst.

5. Vorrichtung nach Anspruch 4, wobei die industriellen Komponenten (5) industrielle Filter und/oder industrielle Blattfilter umfassen.

6. Vorrichtung nach Anspruch 5, wobei das Behandlungsbad Halter umfasst, um mehrere der Blattfilter vertikal und parallel hinsichtlich einander zu platzieren, wenn sie in dem Behandlungsbad untergetaucht sind.

7. Vorrichtung nach einem der vorhergehenden Ansprüche, wobei jedes der Einweichbäder zum Einweichen der industriellen Komponenten in einer Flüssigkeit angepasst ist, die größtenteils aus Wasser besteht, wobei die Flüssigkeit bei einer Temperatur in dem Bereich von 65 °C bis 90 °C vorliegt und/oder die Flüssigkeit einen pH-Wert in dem Bereich von 8,0 bis 14 aufweist, der durch Auflösen eines Alkalisalzes in Wasser erhalten wird.

8. Vorrichtung nach Anspruch 7, wobei jedes des einen oder der mehreren Einweichbäder ein Wärmemodul umfasst, das ein Thermostat umfasst, um die Temperatur zu regulieren.

9. Vorrichtung nach einem der vorhergehenden Ansprüche, wobei die Spülvorrichtung (4) zum Spülen der industriellen Komponenten mit weichem Wasser bei einer Temperatur in dem Bereich von 75 °C bis 100 °C und einem Druck in dem Bereich von 2,0 bar bis 50 bar angepasst ist.

10. Vorrichtung nach einem der vorhergehenden Ansprüche, wobei die Vorrichtung wenigstens zwei der Leitungen (2) umfasst, wobei die Leitungen das parallele Reinigen der industriellen Komponenten bereitstellen und wobei das Wasser und/oder Energieversorgungen der Leitungen miteinander verbunden sind.

11. Vorrichtung nach einem der vorhergehenden Ansprüche, wobei die oder jede der wenigstens einen Leitung (2) wenigstens vier der Einweichbäder (3) umfasst.

12. Verfahren zum Reinigen von industriellen Komponenten, wobei das Verfahren einen fortlaufenden oder semi-fortlaufenden Reinigungsvorgang umfasst, wobei der Reinigungsvorgang Folgendes umfasst:
- aufeinanderfolgendes Einweichen der industriellen Komponenten in mehreren Einweichbädern,
- danach Behandeln der industriellen Komponenten in einem Luftblasenflotationsbad und
- danach Spülen der industriellen Komponenten.

13. Verfahren nach Anspruch 12, wobei die industriellen Komponenten Blattfilter umfassen, wobei das Einweichen der industriellen Komponenten das Platzieren mehrerer Blattfilter vertikal und parallel hinsichtlich einander derart umfasst, dass die mehreren Blattfilter in dem Einweichbad untergetaucht sind.

14. Verfahren nach Anspruch 12, wobei die industriellen Komponente Blattfilter umfassen, wobei die Blattfilter in einem oder mehreren der Einweichbäder einen Zeitraum in dem Bereich von 2 Stunden bis 24 Stunden lang eingeweicht werden.

15. Verfahren nach einem der Ansprüche 12 bis 14, das ferner ein Transportieren der industriellen Komponenten durch ein Frachtfahrzeug von einer industriellen Anlage, wo diese industriellen Komponenten verunreinigt wurden, zu einer Reinigungsanlage und, nach dem Ausführen des fortlaufenden oder semi-fortlaufenden Reinigungsvorgangs durch die Reinigungsanlage, das Transportieren der gereinigten industriellen Komponenten durch ein Frachtfahrzeug zu der industriellen Anlage umfasst.

## Revendications

1. Dispositif (1) destiné au nettoyage de composants industriels (5), dans lequel le dispositif comprend au moins une ligne (2) pour le nettoyage des composants industriels dans un processus de nettoyage en continu ou en semi continu, ladite au moins une ligne comprenant :
- un certain nombre de bains de trempage (3) qui sont destinés à y tremper les composants industriels de manière successive ;
- un bain de flottation avec insufflation d'air (7) destiné à la poursuite du traitement des composants industriels après le trempage ;
un dispositif de rinçage (4) destiné au rinçage des composants industriels après leur traitement dans le bain de flottation avec insufflation d'air (7) ; et
- un système de levage (6) destiné à amener les composants industriels de manière successive dans chacun des bains de trempage, dans le bain de flottation avec insufflation d'air et dans le dispositif de rinçage.

2. Dispositif selon la revendication 1, qui comprend en outre un dispositif de contrôle (8) destiné à contrôler la qualité et/ou l'intégrité des composants industriels après leur rinçage dans le dispositif de rinçage (4).

3. Dispositif selon la revendication 2, dans lequel le dispositif de contrôle (8) est conçu pour mettre en œuvre un essai du point de bouillonnement dans le but d'enregistrer la masse volumique et/ou la résistance à la pression de chaque composant industriel.

4. Dispositif selon l'une quelconque des revendications précédentes, dans lequel chacun des bains de trempage (3) comprend un bain de traitement.

5. Dispositif selon la revendication 4, dans lequel les composants industriels (5) comprennent des filtres industriels et/ou des filtres industriels à cadres.

6. Dispositif selon la revendication 5, dans lequel le bain de traitement comprend des supports qui sont destinés à placer un certain nombre des filtres à cadres en position verticale et parallèlement l'un à l'autre de manière respective au cours de leur immersion dans le bain de traitement.

7. Dispositif selon l'une quelconque des revendications précédentes, dans lequel chacun des bains de trempage est conçu pour le trempage des composants industriels dans un liquide qui se compose majoritairement d'eau, le liquide se trouvant à une température qui se situe dans la plage de 65 °C à 90 °C et/ou le liquide possédant une valeur de pH qui se situe dans la plage de 8,0 à 14 que l'on obtient par dissolution d'un sel alcalin dans de l'eau.

8. Dispositif selon la revendication 7, dans lequel chacun desdits un ou plusieurs bains de trempage comprend un module de chauffage qui comprend un thermostat destiné à réguler la température.

9. Dispositif selon l'une quelconque des revendications précédentes, dans lequel le dispositif de rinçage (4) est conçu pour le rinçage des composants industriels avec de l'eau douce à une température qui se situe dans la plage de 75 °C à 100 °C et sous une pression qui se situe dans la plage de 2,0 bar à 50 bar.

10. Dispositif selon l'une quelconque des revendications précédentes, dans lequel le dispositif comprend au moins deux des lignes en question (2) ; dans lequel les lignes en question procurent le nettoyage de composants industriels en parallèle et dans lequel les alimentations en eau et/ou en électricité des lignes en question sont interconnectées.

11. Dispositif selon l'une quelconque des revendications précédentes, dans lequel ladite au moins une ligne (2) ou chacune de ces dernières comprend au moins quatre bains de trempage en question (3).

12. Procédé destiné au nettoyage de composants industriels, le procédé comprenant un processus de nettoyage en continu ou en semi continu, dans lequel le processus de nettoyage comprend le fait de:
- tremper les composants industriels d'une manière successive dans un certain nombre de bains de trempage ;
- par la suite, traiter les composants industriels dans un bain de flottation par insufflation d'air ; et
- par la suite, rincer les composants industriels.

13. Procédé selon la revendication 12, dans lequel lesdits composants industriels comprennent des filtres à cadres ; dans lequel le trempage en question des composants industriels comprend le fait de placer un certain nombre de filtres à cadres en position verticale et parallèlement l'un à l'autre de manière respective d'une façon telle que lesdits plusieurs filtres à cadres sont immergés dans le bain de trempage.

14. Procédé selon la revendication 12, dans lequel lesdits composants industriels comprennent des filtres à cadres ; dans lequel les filtres à cadres sont trempés dans un des bains de trempage ou dans chacun de ces derniers pendant un laps de temps qui se situe dans la plage allant de 2 heures à 24 heures.

15. Procédé selon l'une quelconque des revendications 12 à 14, qui comprend en outre le fait de transporter les composants industriels par l'intermédiaire d'un véhicule de transport de marchandises à partir d'une installation industrielle dans laquelle ces composants industriels sont devenus pollués jusqu'à une installation nettoyage et, après la mise en oeuvre du processus de nettoyage en continu ou en semi continu par l'intermédiaire de l'installation de nettoyage, le fait de transporter les composants industriels qui ont été nettoyés, par le biais d'un véhicule de transport de marchandises, jusqu'à l'installation industrielle.
